# EUROPEAN PATENT APPLICATION

(11) **EP 4 592 947 A1**
(43) Date of publication of application: **30.07.2025**
(21) Application number: 24222898.9
(22) Date of filing: 23.12.2024
(51) Int. Cl.: G06T 7/00

(54) **METHOD AND APPARATUS FOR INSPECTING LABEL QUALITY**

(30) Priority: 26.01.2024 KR 20240012073
(71) Applicant: SAMSUNG SDI CO., LTD., Yongin-si, Gyeonggi-do 17084 (KR)
(72) Inventor: Choi, Dongsu, 17084 Yongin-Si Gyeonggi-do (KR); Yoo, Byungchul, 17084 Yongin-Si Gyeonggi-do (KR); Yeon, Dae Hyun, 17084 Yongin-Si Gyeonggi-do (KR); Choi, Seulong, 17084 Yongin-Si Gyeonggi-do (KR)
(74) Representative: Gulde & Partner

(57) **Abstract**

A method and a vision inspection apparatus are provided for inspecting the quality of a label. The method includes receiving an image including the label by an imaging unit, extracting a data matrix region of the label from the image by an inspection unit, extracting at least one fixed pattern region from the data matrix region by the inspection unit, and determining an abnormality in quality of the label based on the extracted fixed pattern regions by the inspection unit.

## Description

### BACKGROUND

### Field

Aspects of embodiments of the present disclosure relate to a method and an apparatus for inspecting label quality.

### Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

During the process of producing secondary batteries, labels containing information associated with the secondary batteries may be affixed to the secondary batteries. Conventional techniques determine the print quality of such labels by assessing whether the labels are recognized by barcode readers. However, these barcode readers cannot selectively inspect specific elements, and there is a problem in ensuring the quality of the labels based on consistent criteria due to variations in performance among different models of barcode readers.

The above information disclosed in this Background section is for enhancement of understanding of the background of the present disclosure, and therefore, it may contain information that does not constitute related (or prior) art.

It is an object of the present disclosure to improve the performance and quality of a label inspection.

### SUMMARY

The invention is set out in the appended set of claims. Embodiments of the present disclosure provide a method and apparatus for inspecting label quality.

These and other aspects and features of the present disclosure will be described in or will be apparent from the following description of embodiments of the present disclosure.

In accordance with an aspect of the present disclosure, there is provided a method for inspecting quality of a label, the method including: receiving, from an imaging unit an image including the label; extracting, using an inspection unit, a data matrix region of the label from the image; extracting, using the inspection unit, at least one fixed pattern region from the data matrix region; and determining, using the inspection unit, an abnormality in quality of the label based on the extracted at least one fixed pattern region. The abnormality in quality may refer to a value in quality below a first preset threshold and/or above a second preset threshold (which is higher than the first preset threshold). For example, the range of values between the first preset threshold and the second preset threshold may correspond to values having a desired quality, e.g. lying within a preset range including manufacturing tolerances. In other words, the inspection unit is configured to determine whether the label is of poor (or good) quality based on the fixed pattern regions extracted from the data matrix region. Thus, instead of a random pattern region included in the label, the at least one fixed pattern region may be used to inspect the quality of the label based on consistent criteria. The random pattern region may correspond to a region of the label including different shapes and information depending on product information, characteristics of a secondary battery to which the label may be attached, for example. Thus, based on the image including the label, the inspection unit may be configured to inspect printing defects of the label and/or the quality of the fixed pattern regions in the data matrix region in order to assess the quality of the label based on consistent criteria (due to the fixed pattern regions).

According to one embodiment, the at least one fixed pattern region may include a line region and a dot region.

According to one embodiment, the determination of the abnormality in the quality of the label may be based on the number of dots included in the dot region.

According to one embodiment, the extracting of the at least one fixed pattern region from the data matrix region may include binarizing the data matrix region; and extracting the at least one fixed pattern region from the binarized data matrix region.

According to one embodiment, the determination of the abnormality in the quality of the label may be based on the number of pixels of the at least one fixed pattern region extracted from the binarized data matrix region. By applying binary processing to the data matrix region, the contrast between a printed portion represented in black and an unprinted portion represented in white may be increased. Accordingly, the inspection of the quality of the label may be of a higher level of accuracy.

According to one embodiment, the pixels may be white pixels included in the at least one fixed pattern region.

According to one embodiment, the extracting of the at least one fixed pattern region from the data matrix region may include binarizing the data matrix region; inverting the binarized data matrix region; and extracting the at least one fixed pattern region from the binarized and inverted data matrix region.

According to one embodiment, the determination of the abnormality in the quality of the label may be based on the number of pixels of the at least one fixed pattern region extracted from the binarized and inverted data matrix region. By applying binary processing to the data matrix region, the contrast between a printed portion represented in black and an unprinted portion represented in white may be increased and due to the inversion to the data matrix region, the clarity of the printed and unprinted portions may be further increased. Accordingly, the inspection of the quality of the label may be of a higher level of accuracy.

According to one embodiment, the determination of the abnormality in the quality of the label may include adjusting an inspection region based on an area of the at least one fixed pattern region; and determining the abnormality in the quality of the label based on the adjusted inspection region. For example, the inspection unit may include an inspection region of a default size. Specifically, if the fixed pattern region has an area difference of a threshold (e.g., 10%, etc.) or more compared to a reference value, the inspection unit may adjust the default inspection region to a region of a predefined size (e.g., of a smaller size, such as a quarter, one-third, or half of the size of the fixed pattern region or the like). By scaling down the default inspection region, the likelihood that the scaled down inspection region includes some pixels from adjacent pattern regions, such as the random pattern region, in addition to the predefined fixed pattern region may be significantly reduced.

According to one embodiment, the method described above may further include transmitting information associated with the label to an external apparatus when it is determined that there is the abnormality in the quality of the label and/or when it is determined that there is no abnormality in the quality of the label. The information associated with the label may include an identifier of the label, an identifier of the secondary battery to which the label is attached, the determined quality and the like. Accordingly, a feedback concerning the quality of the label is provided to the external apparatus, thereby allowing to store the determined qualities of the labels for further evaluation.

According to one embodiment, the label is attached to a secondary battery.

In accordance with another aspect of the present disclosure, there is provided a non-transitory computer-readable recording medium storing instructions for executing the method described above on a computer.

In accordance with still another aspect of the present disclosure, there is provided a vision inspection apparatus including: an imaging unit configured to capture an image including a label; and an inspection unit configured to determine an abnormality in quality of the label. The inspection unit is configured to (or may include at least one processor configured to) extract a data matrix region of the label from the image including the label captured by the imaging unit, extract at least one fixed pattern region from the data matrix region, and determine the abnormality in the quality of the label based on the extracted at least one fixed pattern region. For example, the processor may be configured to read out and execute instructions stored in at least one memory to thereby cause the apparatus to function as the inspection unit.

According to one embodiment, the at least one fixed pattern region may include a line region and a dot region.

According to one embodiment, the inspection unit may be configured to determine the abnormality in the quality of the label based on the number of dots included in the dot region.

According to one embodiment, the inspection unit may be configured to convert the data matrix region into a binary form and extract the at least one fixed pattern region from the binarized data matrix region.

According to one embodiment, the inspection unit may be configured to determine the abnormality in the quality of the label based on the number of pixels of the at least one fixed pattern region extracted from the binarized data matrix region.

According to one embodiment, the pixels may be white pixels included in the at least one fixed pattern region.

According to one embodiment, the inspection unit may be configured to convert the data matrix region into a binary form, perform an image inversion on the binarized data matrix region, and extract the at least one fixed pattern region from the binarized and inverted data matrix region.

According to one embodiment, the inspection unit may be configured to determine the abnormality in the quality of the label based on the number of pixels of the at least one fixed pattern region extracted from the binarized and inverted data matrix region.

According to one embodiment, the inspection unit may be configured to adjust an inspection region based on an area of the at least one fixed pattern region and determine the abnormality om the quality of the label based on the adjusted inspection region.

According to some embodiments of the present disclosure, the vision inspection apparatus can select and inspect only the fixed pattern region(s) whose shape does not change among the components of the label attached to the secondary battery. As a result, the over-inspection rate in the label quality inspection can be reduced even by using the vision inspection apparatus that performs inspection of fixed pattern region(s) according to predetermined rules.

According to some embodiments of the present disclosure, the quality inspection can be performed based on at least one of the light region or the dot region among the fixed pattern regions. Consequently, by selectively inspecting at least some of the fixed pattern regions of the label, the accuracy of the quality inspection of the label can be increased and the over-inspection rate can be reduced.

According to some embodiments of the present disclosure, by adjusting the inspection region within the fixed pattern region of the label to reduce the over-inspection rate caused by the vision inspection apparatus, the abnormality of the label quality can be determined with a higher level of accuracy. In addition, by minimizing the physical factors affecting the over-inspection rate for the label, the abnormality in the label quality can be determined more accurately.

However, aspects and features of the present disclosure are not limited to those described above, and other aspects and features not mentioned will be clearly understood by a person skilled in the art from the detailed description, described below.

### BRIEF DESCRIPTION OF DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 is a diagram illustrating an example in which a label is attached to a secondary battery according to one embodiment of the present disclosure.
FIG. 2 is a diagram illustrating an example of the label according to one embodiment of the present disclosure.
FIG. 3 is a diagram illustrating an example of preprocessing a data matrix region according to one embodiment of the present disclosure.
FIG. 4 is a diagram illustrating an example of inspecting quality of a line region among fixed pattern regions according to one embodiment of the present disclosure.
FIG. 5 is a diagram illustrating an example of adjusting an inspection region according to one embodiment of the present disclosure.
FIG. 6 is a diagram illustrating an example of a graph representing the number of pixels detected according to one embodiment of the present disclosure.
FIG. 7 is a diagram illustrating an example of inspecting quality of a dot region among fixed pattern regions according to one embodiment of the present disclosure.
FIG. 8 is a flowchart illustrating an example of a method for inspection label quality according to one embodiment of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when a layer or element is referred to as being "between" two layers, it can be the only layer between the two layers, or one or more intervening layers may also be present. It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of local patent laws.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

The term "module" or "unit" used herein refers to a software or hardware component, and "module" or "unit" performs certain roles. However, the meaning of the "module" or "unit" is not limited to software or hardware. The "module" or "unit" may be configured to be in an addressable storage medium or configured to reproduce one or more processors. Accordingly, as an example, the "module" or "unit" may include components such as software components, object-oriented software components, class components, and task components, and at least one of processes, functions, attributes, procedures, subroutines, segments of program code, drivers, firmware, micro-codes, circuits, data, database, data structures, tables, arrays, or variables. Furthermore, functions provided in the components and the "modules" or "units" may be combined into a smaller number of components and "modules" or "units", or further divided into additional components and "modules" or "units."

The "module" or "unit" may be implemented as a processor and a memory. The "processor" should be interpreted broadly to encompass a general-purpose processor, a central processing unit (CPU), a microprocessor, a digital signal processor (DSP), a controller, a microcontroller, a state machine, and so forth. Under some circumstances, the "processor" may refer to an application-specific integrated circuit (ASIC), a programmable logic device (PLD), a field-programmable gate array (FPGA), and so on. The "processor" may refer to a combination for processing devices, e.g., a combination of a DSP and a microprocessor, a combination of a plurality of microprocessors, a combination of one or more microprocessors in conjunction with a DSP core, or any other combination of such configurations. In addition, the "memory" should be interpreted broadly to encompass any electronic component that is capable of storing electronic information. The "memory" may refer to various types of processor-readable media such as random access memory (RAM), read-only memory (ROM), non-volatile random access memory (NVRAM), programmable read-only memory (PROM), erasable programmable read-only memory (EPROM), electrically erasable PROM (EEPROM), flash memory, magnetic or optical data storage, registers, and so on. The memory is said to be in electronic communication with a processor if the processor can read information from and/or write information to the memory. The memory integrated with the processor is in electronic communication with the processor.

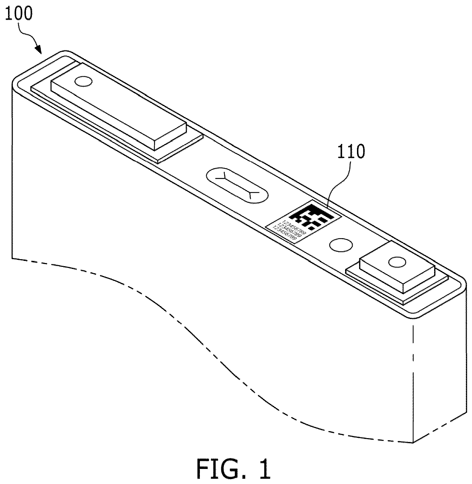

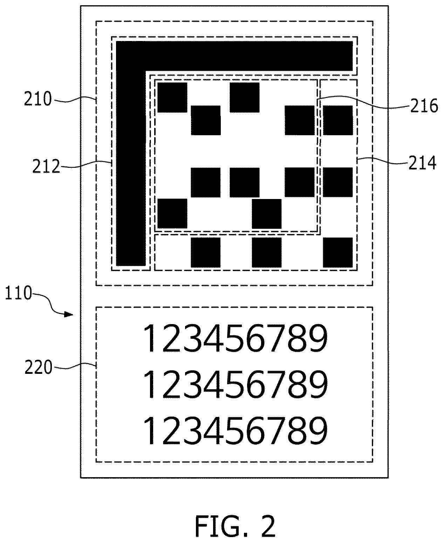

FIG. 1 is a diagram illustrating an example in which a label 110 is attached to a secondary battery 100 according to one embodiment of the present disclosure, and FIG. 2 is a diagram illustrating an example of the label 110 according to one embodiment of the present disclosure. In one embodiment, the label 110 may be attached to a portion of a top surface or a portion of another surface (e.g., a bottom surface or a lateral surface) of the secondary battery 100. Such label 110 may include a data matrix region 210 and a text region 220 to indicate information associated with the secondary battery 100. Here, the information associated with the secondary battery 100 may include a model name, an electrical capacity, a charging status, a material or a chemical composition of the secondary battery 100.

In order to inspect the quality of the label 110 attached to the secondary battery 100, a vision inspection apparatus having an imaging unit, such as a camera, may inspect the attachment location of the label 110 on the secondary battery 100. However, the vision inspection apparatus typically performs inspections based on predetermined rules. Thus, it may be difficult to detect, for example, printing defects (e.g., poor printing) of a label in which the text region 220 and the data matrix region 210, which, in the present embodiment, may include one or more fixed pattern regions 212 and 214 combined with a random pattern region 216. The present disclosure provides a label quality inspection method in which the fixed pattern regions of the label 110 attached to the secondary battery 100 may be selectively inspected using the vision inspection apparatus, thereby detecting quality issues such as printing detects of the label with high accuracy and minimizing an over-inspection rate in label quality inspection. An over-inspection may refer to the circumstance that some of the inspection information is erroneously detected, e.g. that more information is detected than actually present on the area which is to be inspected.

In one embodiment, the imaging unit of the vision inspection apparatus may capture an image including the label 110. Based on the image including the label 110, the vision inspection apparatus may inspect not only the printing defects of the label 110 and the location where the label 110 is attached to the secondary battery 100, but also the quality of the fixed pattern regions in the data matrix region 210.

In one embodiment, an inspection unit of the vision inspection apparatus extracts the data matrix region 210 of the label 110 from the image including the label 110. Here, the data matrix region 210 may include the fixed pattern regions including a line region 212 and a dot region 214, and the random pattern region 216. The random pattern region 216 may contain different shapes and information depending on the product information or characteristics of the secondary battery to which the label is attached. Thus, instead of the random pattern region 216, the fixed pattern regions may be used to inspect the quality of the label 110 based on consistent criteria.

In one embodiment, the inspection unit may determine whether the label 110 is of poor or good quality based on the fixed pattern regions extracted from the data matrix region 210. In other words, the inspection unit may assess the quality of label 110 based on the fixed pattern regions extracted from the data matrix region 210. Specifically, the inspection unit may determine whether the label 110 is of poor or good quality based on, for example, the number of pixels in each of the fixed pattern regions and/or the number of dots included in the dot region. If the inspection unit determines that the label 110 has an abnormality in quality, the inspection unit may transmit information associated with the label 110 and/or the determined quality to an external apparatus. Here, the information associated with the label 110 may include an identifier of the label 110, an identifier of the secondary battery 100 to which the label 110 is attached, and the like.

While FIG. 2 shows an example in which the line region 212 is located at the upper left corner of the data matrix region 210, and the dot region 214 is located at the lower right corner of the data matrix region 210, the present disclosure is not limited thereto. In other words, the vision inspection apparatus may selectively detect fixed pattern regions located at various positions within the data matrix region 210 of the label 110, and the vision inspection apparatus may determine an abnormality in label quality based on the detected fixed pattern regions. For example, the vision inspection apparatus may include a memory for storing a plurality of different labels in which the fixed pattern regions are known. Additionally or alternatively, the vision inspection apparatus may be configured to detect fixed pattern regions located at various positions within the data matrix region 210 of the label 110 based on a comparison with a plurality of images of labels of components which have been assessed before. Due to the comparison of the data matrix regions 210 of images from different labels, the fixed pattern regions and the random pattern regions 216 may be figured out.

In this configuration, the vision inspection apparatus can select and inspect only the fixed pattern region(s) whose shape does not change among the components of the label attached to the secondary battery. As a result, the over-inspection rate in the label quality inspection can be reduced even by using the vision inspection apparatus that performs inspection of the fixed pattern region(s) according to predetermined rules.

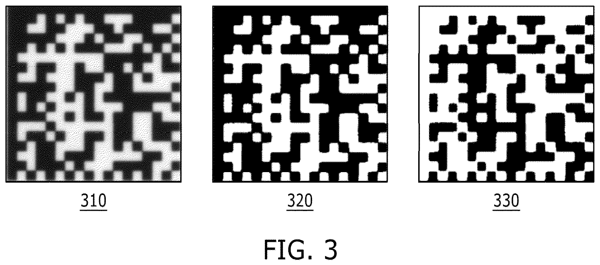

FIG. 3 is a diagram illustrating an example of preprocessing a data matrix region according to one embodiment of the present disclosure. A first image 310 represents an example of a data matrix region extracted from an image including a label captured by the imaging unit of the vision inspection apparatus. In a case where a camera serves to capture the image, the clarity of the label image may be reduced due to various external factors, such as light flare, camera noise, ambient light noise, label printer ink dispersion, inspection equipment vibration, and the like. As a result, if the vision inspection apparatus employs an image of a data matrix region (e.g., the first image 310) extracted from a label image with reduced clarity, over-inspection may occur during inspection of the label.

A second image 320 represents an example of the data matrix region after being subjected to binary processing, derived from the first image 310 (that is, the second image 320 is a binary-processed image obtained after the first image 310 is converted into a binary form). A binary-processed image may be a digital image consisting of pixels that can have one of exactly two colors, e.g. black and white. Each pixel is stored as a single bit, i.e. either a 0 or 1. By applying the binary processing to the first image 310, the contrast between a printed portion represented in black and an unprinted portion represented in white may be increased. Accordingly, the inspection unit of the vision inspection apparatus may inspect the quality of the label with a higher level of accuracy by using the binary-processed second image 320.

Further, a third image 330 represents an example of the data matrix region after undergoing inversion processing, derived from the second image 320 (that is, the third image 330 is an inversion-processed image obtained by inverting the binary-processed second image 320). By inverting the data matrix region, the clarity of the printed and unprinted portions can be further increased. Accordingly, the inspection unit of the vision inspection apparatus may inspect the quality of the label with a higher level of accuracy by using the binarized and inverted third image 330.

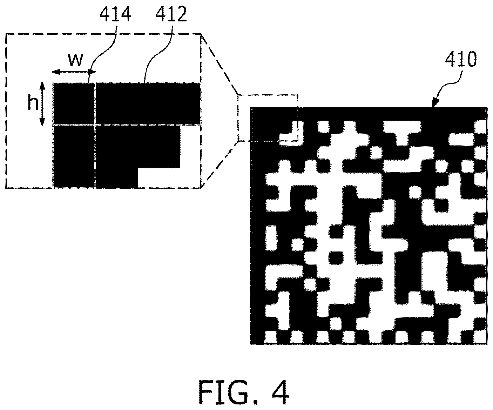

FIG. 4 is a diagram illustrating an example of inspecting the quality of a line region 412 among fixed pattern regions according to one embodiment of the present disclosure. In one embodiment, the inspection unit of the vision inspection apparatus extracts the fixed pattern regions from a data matrix region 410. Here, the data matrix region 410 may be a region included in a binary-processed image, such as the second image 320 of FIG. 3. Further, the inspection unit may extract the line region 412 that includes a horizontal line placed at the upper side of the data matrix region 410 and a vertical line placed at the left side of the data matrix region 410 from among the fixed pattern regions.

In one embodiment, the inspection unit may determine an abnormality in label quality based on the number of pixels in the line region 412. For example, the line region 412 may include a plurality of dots 414 each of which represents a minimum size unit for displaying information in the data matrix region 410. For example, each of the dots 414 may be composed of 16 pixels in both width (w) and height (h). In other words, if each of the horizontal line and the vertical line within the line region 412 includes 18 dots 414, then each of the horizontal line and the vertical line within the line region 412 may consist of 4608 pixels (16 pixels width per dot x 16 pixels height in each dot x 18 dots). Accordingly, the inspection unit may detect the number of pixels of the horizontal line and/or the vertical line of the line region 412 and determine print defects, i.e. an abnormality in label quality, if there is a difference of more than a threshold value, e.g., 461 pixels, which is 10% from the reference value of 4608 pixels. However, the present disclosure is not limited to this number. The inspection unit may also determine print defects, if there is a difference of more than 2.5%, 5% or 15% from the reference value, for example. The threshold value may be set as desired by the user.

In one embodiment, the inspection unit may determine the abnormality in the label quality based on the number of white pixels in the line region 412. Because the line region 412 is composed of black pixels, it may include white pixels that appear as white regions due to external factors such as printing noise, light reflection, and the like. The number of such white pixels or the ratio of such white pixels to the black pixels may affect label quality inspection. The number of such white pixels or their ratio to black pixels may affect label quality inspection. Therefore, by detecting the white pixels included in the line region 412, the inspection unit may more accurately inspect the quality of the label while minimizing the impact of the external factors that occur when an image of the label is captured.

In FIG. 4, the use of the binarized data matrix region 410 is illustrated, but the present disclosure is not limited thereto. For example, fixed pattern regions may be extracted from a binarized and inverted data matrix region, such as the third image 330 of FIG. 3, and the abnormality in the label quality may be determined based on the number of black pixels in a line region among the fixed pattern regions.

With such a configuration, the vision inspection apparatus can perform quality inspection based on the line region among the fixed pattern regions. Thus, by efficiently selecting and inspecting at least some of the fixed pattern regions of the label, the accuracy of the quality inspection of the label can be increased and the over-inspection rate can be reduced.

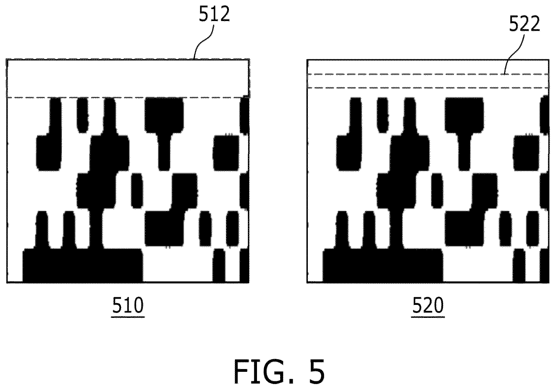

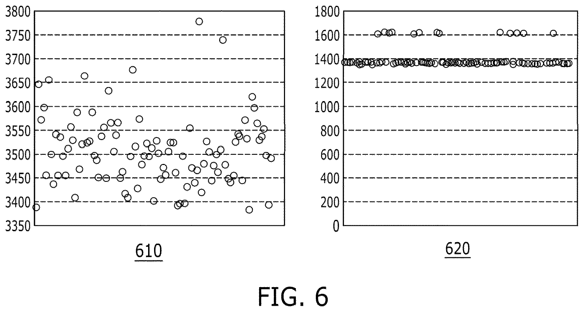

FIG. 5 is a diagram illustrating an example of adjusting an inspection region according to one embodiment of the present disclosure, and FIG. 6 is a diagram illustrating an example of a graph representing the number of pixels detected according to one embodiment of the present disclosure. A first image 510 represents an example of a data matrix region that is skewed due to physical factors such as print dispersion during the labeling process, and a first graph 610 illustrates an example of a graph displaying the number of pixels in a first inspection region 512 detected from multiple rounds of vision inspections. In one embodiment, an image of the label may be captured in a tilted position due to the physical factors. In this case, the first inspection region 512 corresponding to the horizontal line of the fixed pattern region may widen compared to the original inspection region, or may include some pixels from adjacent random pattern region alongside the predetermined fixed pattern region. Accordingly, referring to the first graph 610, a different number of pixels in the first inspection region 512 is detected each time the vision inspection is performed, which may result in an increase in the over-inspection rate. Here, a horizontal axis of the graph 610 represents the number of attempts (tries) to detect pixels in the inspection region during vision inspection, and a vertical axis of the graph 610 represents the number of pixels detected within the inspection region.

A second image 520 represents an example of a second inspection region 522 that is set by scaling down the first inspection region 512 of the first image 510. In one embodiment, the inspection unit of the vision inspection apparatus may adjust the inspection region based on the area of the fixed pattern region. Specifically, if the fixed pattern region has an area difference of a threshold (e.g., 10%, etc.) or more compared to a reference value, the inspection unit may adjust the inspection region to a region of a predefined size (e.g., of a smaller size, such as a quarter, one-third, or half of the size of the fixed pattern region or the like). Here, the predefined region may be located at approximately the center of the fixed pattern region. By scaling down the first inspection region 512, corresponding to the horizontal line of the fixed pattern region, to the second inspection region 522 by reducing its height, the likelihood that the second inspection region 522 includes some pixels from the adjacent random pattern region in addition to the predefined fixed pattern region is significantly reduced. Consequently, referring to the second graph 620, the number of pixels in the second inspection region 522 may be more consistently detected each time the vision inspection is performed.

While FIG. 5 illustrates a binarized and inverted data matrix region, such as the third image 330 of FIG. 3, the present disclosure is not limited thereto. For example, the inspection region may be adjusted even in a binarized data matrix region such as the second image 320 of FIG. 3. Further, while FIG. 5 illustrates a horizontal line region among fixed pattern regions as an example, the present disclosure is not limited thereto. For example, the inspection region may also be adjusted in a vertical line region among the fixed pattern regions.

The above-described configuration allows for a higher level of accuracy in determining the abnormality in the label quality by adjusting the inspection region within the fixed pattern region of the label to reduce the over-inspection rate caused by the vision inspection apparatus. In addition, by minimizing the physical factors affecting the over-inspection rate for the label, the abnormality in the label quality can be determined more accurately.

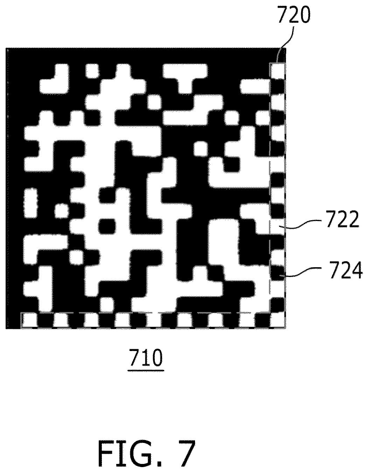

FIG. 7 is a diagram illustrating an example of inspecting the quality of a dot region 720 among fixed pattern regions according to one embodiment of the present disclosure. In one embodiment, the fixed pattern regions of a data matrix region 710 may include the dot region 720 as well as a line region. However, the line region may also be omitted. Here, the dot region 720 may include a plurality of dots each of which represents a minimum size unit, e.g. for displaying information associated with the secondary battery 100 to which the label is attached. As shown in FIG. 7, the vision inspection apparatus may extract the dot regions 720 respectively, e.g. positioned at the lower side and the right side of a data matrix region 710 in which the fixed pattern regions are arranged.

In one embodiment, the inspection unit of the vision inspection apparatus may determine the abnormality in the label quality based on the number of dots included in the dot region 720. Specifically, the inspection unit may count the number of white dots 722 and/or black dots 724 included in the dot region 720. Further, the inspection unit may determine that at least a portion of the label is not printed if the number of dots is less than a preset threshold value. Additionally or alternatively, if the number of dots is greater than a preset threshold value, the inspection unit may determine that at least a portion of the label is printed in poor condition (i.e. has an abnormality in quality), for example, due to ink bleeding and the like.

While FIG. 7 illustrates a binarized and inverted data matrix region, such as the third image 330 of FIG. 3, the present disclosure is not limited thereto. Even in a binarized data matrix region such as the second image 320 of FIG. 3, the quality of the label may be inspected and examined based on the number of dots contained in the dot region. Further, the method for inspecting and examining the quality of the dot region 720 may be executed in parallel with the method described earlier for inspecting and examining the quality of the line region.

With this configuration, quality inspection can be performed with high accuracy based on the dot region among the fixed pattern regions. Consequently, by selectively inspecting at least some of the fixed pattern regions of the label, the vision inspection apparatus can reduce the over-inspection rate.

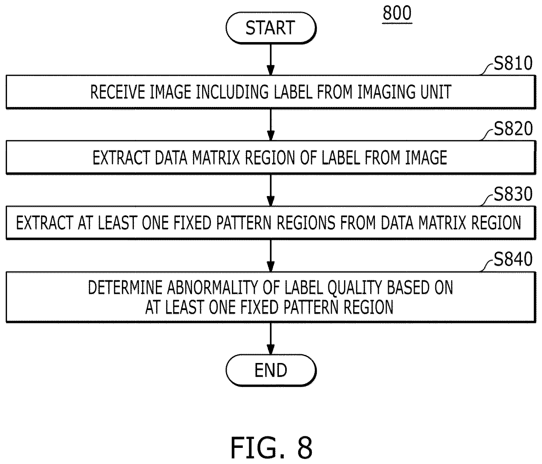

FIG. 8 is a flowchart illustrating an example of a method 800 for inspection label quality according to one embodiment of the present disclosure. In one embodiment, the method 800 may be performed by at least one processor of a vision inspection apparatus. The method 800 may begin with the processor receiving an image including a label from an imaging unit (step S810). Further, the processor extracts a data matrix region of the label from the image by an inspection unit (step S820).

Next, the processor extracts at least one fixed pattern region from the data matrix region by the inspection unit (step S830). In this step, the processor may binarize the data matrix region, for example. Further, the processor may extract the fixed pattern region from the binarized data matrix region.

Thereafter, the processor determines an abnormality in the label quality based on the fixed pattern region extracted by the inspection unit (step S840). Specifically, the processor may determine the abnormality in the label quality based on the number of pixels of the fixed pattern region extracted from the binarized data matrix region. Here, the pixels may be white pixels included in the fixed pattern region. Further, the processor may transmit information associated with the label to an external apparatus if the processor determines that the label has the abnormality in quality.

In one embodiment, the at least one fixed pattern region may include a line region and a dot region. In this case, the processor may determine the abnormality in the label quality based on the number of dots included in the dot region.

In one embodiment, the processor may binarize the data matrix region. Further, the processor may invert the binarized data matrix region. Further, the processor may extract at least one fixed pattern region from the binarized and inverted data matrix region. In this case, the processor may determine the abnormality in the label quality based on the number of pixels in the fixed pattern region extracted from the binarized and inverted data matrix region.

In one embodiment, the processor may adjust an inspection area based on an area of the fixed pattern region. Further, the processor may determine the abnormality in the label quality based on the area-adjusted inspection region.

The methods described above may be configured in a form of computer programs stored in non-transitory computer-readable media to be executed by various computer devices. Here, media may continuously store computer-executable programs or may transitorily store the same for execution or download. Also, the media may be various types of recording devices or storage devices in a form in which one or a plurality of hardware components are combined. Without being limited to media directly connected to a computer system, the media may be distributed over the network. Examples of the media include magnetic media such as hard disks, floppy disks, and magnetic media such as magnetic tapes; optical media such as CD-ROM and DVDs; magneto-optical media such as floptical disks; and hardware devices that are specially configured to store program instructions, such as read-only memory (ROM), random access memory (RAM), flash memory, and the like. Examples of other media may include record media and storage media managed by an application store that distributes applications or a site that supplies and distributes other various types of software, a server, and the like.

The methods, operations, or techniques of the present disclosure may be implemented by various means. For example, these techniques may be implemented in hardware, firmware, software, or a combination thereof. Those skilled in the art will further appreciate that various illustrative logical blocks, modules, circuits, and algorithm steps described in connection with the disclosure herein may be implemented in electronic hardware, computer software, or combinations of both. To clearly illustrate this interchangeability of hardware and software, various illustrative components, blocks, modules, circuits, and steps have been described above generally in terms of their functionality. Whether such a function is implemented as hardware or software varies depending on design requirements imposed on the particular application and the overall system. Those skilled in the art may implement the described functions in varying ways for each particular application, but such implementation should not be interpreted as causing a departure from the scope of the present disclosure.

In a hardware implementation, processing units used to perform the techniques may be implemented in one or more application-specific integrated circuits (ASICs), digital signal processors (DSPs), graphical processing units (GPUs), digital signal processing devices (DSPDs), programmable logic devices (PLDs), field programmable gate arrays (FPGAs), processors, controllers, microcontrollers, microprocessors, electronic devices, other electronic units designed to perform the functions described in the present disclosure, computer, or a combination thereof.

Accordingly, various example logic blocks, modules, and circuits described in connection with the present disclosure may be implemented or performed with general purpose processors, DSPs, ASICs, FPGAs or other programmable logic devices, discrete gate or transistor logic, discrete hardware components, or any combination of those designed to perform the functions described herein. The general purpose processor may be a microprocessor, but in the alternative, the processor may be any related processor, controller, microcontroller, or state machine. The processor may also be implemented as a combination of computing devices, for example, a DSP and microprocessor, a plurality of microprocessors, one or more microprocessors associated with a DSP core, or any other combination of the configurations.

In the implementation using firmware and/or software, the techniques may be implemented with instructions stored on a computer-readable medium, such as random access memory (RAM), read-only memory (ROM), non-volatile random access memory (NVRAM), programmable read-only memory (PROM), erasable programmable read-only memory (EPROM), electrically erasable PROM (EEPROM), flash memory, compact disc (CD), magnetic or optical data storage devices, and the like. The instructions may be executable by one or more processors, and may cause the processor(s) to perform certain aspects of the functions described in the present disclosure.

When implemented in software, the techniques may be stored on a computer-readable medium as one or more instructions or codes, or may be transmitted through a computer-readable medium. The computer-readable media may include both the computer storage media and the communication media including any medium that facilitates the transfer of a computer program from one place to another. The storage media may also be any available media that may be accessed by a computer. By way of non-limiting example, such a computer-readable medium may include RAM, ROM, EEPROM, CD-ROM or other optical disk storage, magnetic disk storage or other magnetic storage devices, or any other media that can be used to transfer or store desired program code in the form of instructions or data structures and can be accessed by a computer. In addition, any connection is properly performed by a computer-readable medium.

For example, when the software is transmitted from a website, server, or other remote sources using coaxial cable, fiber optic cable, twisted pair, digital subscriber line (DSL), or wireless technologies such as infrared, wireless, and microwave, the coaxial cable, the fiber optic cable, the twisted pair, the digital subscriber line, or the wireless technologies such as infrared, wireless, and microwave are included within the definition of the medium. The disks and the discs used herein include CDs, laser disks, optical disks, digital versatile discs (DVDs), floppy disks, and Blu-ray disks, where disks usually magnetically reproduce data, while discs optically reproduce data using a laser. The combinations described above should also be included within the scope of the computer-readable media.

The software module may reside in RAM memory, flash memory, ROM memory, EPROM memory, EEPROM memory, registers, hard disk, removable disk, CD-ROM, or any other form of storage medium known. An exemplary storage medium may be connected to the processor, such that the processor may read or write information from or to the storage medium. Alternatively, the storage medium may be integrated into the processor. The processor and the storage medium may exist in the ASIC. The ASIC may exist in the user terminal. Alternatively, the processor and storage medium may exist as separate components in the user terminal.

Although the examples described above have been described as utilizing aspects of the currently disclosed subject matter in one or more standalone computer systems, the present disclosure is not limited thereto, and may be implemented in conjunction with any computing environment, such as a network or distributed computing environment. Furthermore, the aspects of the subject matter in the present disclosure may be implemented in multiple processing chips or devices, and storage may be similarly influenced across a plurality of devices. Such devices may include PCs, network servers, and portable devices.

Although the present disclosure has been described above with respect to embodiments thereof, the present disclosure is not limited thereto. Various modifications and variations can be made thereto by those skilled in the art within the scope of the appended claims.

### [DESCRIPTION OF SOME REFERENCE SYMBOLS]

100: secondary battery
110: label
210: data matrix region
212: line region
214: dot region
216 random pattern region
220: text region

## Claims

1. A method (800) for inspecting quality of a label (110), the method (800) comprising:
receiving (S810) from an imaging unit an image including the label (110);
extracting (S820), using an inspection unit, a data matrix region (210) of the label (110) from the image;
extracting (S830), using the inspection unit, at least one fixed pattern region from the data matrix region (210); and
determining (S840), using the inspection unit, an abnormality in quality of the label (110) based on the extracted at least one fixed pattern region.

2. The method (800) as recited in claim 1, wherein the at least one fixed pattern region comprises a line region (212) and a dot region (214).

3. The method (800) as recited in claim 2, wherein the determination (S840) of the abnormality in the quality of the label (110) is based on the number of dots included in the dot region (214).

4. The method (800) as recited in any one of the preceding claims, wherein the extracting (S830) of the at least one fixed pattern region from the data matrix region (210) comprises:
binarizing the data matrix region (210); and
extracting the at least one fixed pattern region from the binarized data matrix region.

5. The method (800) as recited in claim 4, wherein the determination (S840) of the abnormality in the quality of the label (110) is based on the number of pixels of the at least one fixed pattern region extracted from the binarized data matrix region.

6. The method (800) as claimed in recited 5, wherein the pixels are white pixels included in the at least one fixed pattern region.

7. The method (800) as recited in any one of the preceding claims, wherein the extracting (S830) of the at least one fixed pattern region from the data matrix region comprises:
binarizing the data matrix region (210);
inverting the binarized data matrix region (210); and
extracting the at least one fixed pattern region from the binarized and inverted data matrix region.

8. The method (800) as recited in claim 7, wherein the determination (S840) of the abnormality in the quality of the label (110) is based on the number of pixels of the at least one fixed pattern region extracted from the binarized and inverted data matrix region.

9. The method (800) as recited in any one of the preceding claims, wherein the determination (S840) of the abnormality in the quality of the label (110) comprises:
adjusting an inspection region based on an area of the at least one fixed pattern region; and
determining the abnormality in the quality of the label (110) based on the adjusted inspection region.

10. The method (800) as recited in any one of the preceding claims, further comprising transmitting information associated with the label to an external apparatus when it is determined that there is the abnormality in the quality of the label (110) and/or when it is determined that there is no abnormality in the quality of the label (110).

11. The method (800) as recited in any one of the preceding claims, wherein the label is attached to a secondary battery (100).

12. A non-transitory computer-readable recording medium storing instructions for executing the method (800) according to any one of the preceding claims on a computer.

13. A vision inspection apparatus comprising:
an imaging unit configured to capture an image including a label (110); and
an inspection unit configured to determine an abnormality in quality of the label (110),
wherein the inspection unit is configured to
(i) extract a data matrix region (210) of the label (110) from the image including the label (110) captured by the imaging unit,
(ii) extract at least one fixed pattern region from the data matrix region (210), and
(iii) determine the abnormality in the quality of the label (110) based on the extracted at least one fixed pattern region.

14. The vision inspection apparatus as recited in claim 13, wherein the at least one fixed pattern region comprises a line region (212) and a dot region (214).

15. The vision inspection apparatus as recited in claim 14, wherein the inspection unit is configured to determine the abnormality in the quality of the label (110) based on the number of dots included in the dot region (214).
